# EUROPEAN PATENT APPLICATION

(11) **EP 1 835 734 A2**
(43) Date of publication of application: **19.09.2007**
(21) Application number: 07005465.5
(22) Date of filing: 16.03.2007
(51) Int. Cl.: H04N 5/445

(54) **Broadcasting receive apparatus**

(30) Priority: 17.03.2006 JP 2006075264
(71) Applicant: KABUSHIKI KAISHA TOSHIBA, Tokyo 105-8001 (JP)
(72) Inventor: Doi, Miwako c/o Intellectual Property Division, Tokyo (JP); Sugita, Kaoru c/o Intellectual Property Division, Tokyo (JP)
(74) Representative: HOFFMANN EITLE

(57) **Abstract**

A broadcasting receive apparatus includes a digital broadcasting receiving unit that receives a digital broadcasting, a program table obtaining unit that obtains a program table of an analog broadcasting, a channel correspondence storing unit that stores a channel correspondence, the channel correspondence relating a channel of the digital broadcasting to a channel of the analog broadcasting, and a program converting unit configured to convert the program table to a compatible program table with the digital broadcasting according to the channel correspondence.

## Description

### BACKGROUND OF THE INVENTION

### Field of the Invention

The present invention relates to a broadcasting receive apparatus for receiving and viewing a digital terrestrial TV broadcasting and an analog TV broadcasting.

### Description of the Related Art

Since stop of an analog wave is expected in 2011, there has been in the market the spread of receivers having tuners for receiving both digital and analog waves (a simultaneous broadcasting), an AV-PC having a function for playing back various kinds of DVD (Digital Versatile Disc) media, and image recording and playing back devices of DVD and HDD (hard Disk Drive).

On the other hand, as for the analog TV broadcasting, DVD/HDD image recording/playing back devices have been spread. The electronic program guide (EPG) of two weeks ahead can be obtained via the Internet so that a timer recording can be performed based on the EPG. That is, the EPGs of scheduled broadcasting programs are collected by a newspaper office or the like from each TV office, to be distributed via the Internet to portal sites or the like, which has agreed with the contracts for use. According to this system, for instance, the EPGs for two weeks can be obtained in the Kanto area with respect to the analog broadcasting of six channels for recording.

In contrast, in the digital terrestrial TV broadcasting, a service that the EPGs are previously collected and distributed like the analog TV broadcasting has not been yet started because of the reasons that the number of channels is enormously large and areas where the digital terrestrial TV broadcasting can be received are not yet spread all over the country. Further, since the data of the EPG is transmitted together with a broadcasting wave, the receiver side can merely obtain the EPG information only for a channel unit (for instance, see JP-A-2006-075264 (Kokai)). Namely, to obtain the EPG information for all channels, all the channels need to be previously switched to obtain the EPG data of the channels (about two weeks ahead). Thus, it takes much time to obtain the EPG data of one channel. Assuming that it takes, for instance, 6 minutes to obtain the EPG data for each channel, it truly takes two hours or more to obtain the EPG data of all the channels.

In the digital terrestrial TV broadcasting, the extension of a sport program or the like can be conveniently followed with a delay of several minutes. The EPG data thereof can be advantageously obtained from the same channel. However, when it is desired to obtain the EPG information of all the channels to perform timer recordings like the current analog TV broadcasting, the digital terrestrial TV broadcasting might be inconvenient.

The EPG of the analog TV broadcasting is not completely the same as that of the digital TVbroadcasting. The difference between the analog TV broadcasting and the digital TV broadcasting is as follows. In the analog TV broadcasting, a title is divided into a title and a sub-title. In the digital TV broadcasting, the title is limited and integrated to 40 characters. Likewise, to previously obtain program information, for instance, when a program desired to be viewed is selected or searched or a recommended program is desired to be obtained, a tuner needs to be switched to all channels at a time to obtain the EPG information. Especially, a process for switching all the channels to obtain the EPG information is to be carried out in a background. However, since the AV-PC is not an exclusive device, when the TV is not played back, a process that needs an extremely great CPU power may be possibly carried out. When a process that is important and needs such a CPU power is performed, there is a possibility that all the channels may not be unreasonably switched to obtain the EPG information in the digital terrestrial TV broadcasting.

In the analog TVbroadcasting, a received image is directly recorded and a still image cut from a motion image can be used as a thumbnail showing the contents of the moving image. However, there are restrictions in the digital TV broadcasting. Cutting the still image from the moving image is also restricted.

Accordingly, a device on which a tuner for both of the digital and analog TV broadcasting is mounted can form the thumbnail in the analog TV broadcasting, while the thumbnail in the digital TV broadcasting cannot be provided. Such a device necessarily serves as an unmatched interface for a viewer.

### SUMMARY OF THE INVENTION

In the analog terrestrial TV broadcasting, the EPGs for two weeks are collected and are available on a broadcasting signal on which program information is superimposed or from an internet server. By contrast, in the digital terrestrial TV broadcasting, obtaining the EPG for all channels requires switching of the channels to obtain the EPG for each channel so that it takes much time to obtain program information. Therefore, timer recording of programs as in the analog TV broadcasting might not be carried out in the digital broadcasting.

Accordingly, the invention provides a simultaneous broadcasting receiver that enables easy select of a program or timer recording without taking much time both in a digital terrestrial TV broadcasting and an analog TV broadcasting.

The invention may provide a broadcasting receive apparatus including a digital broadcasting receiving unit that receives a digital broadcasting; a program table obtaining unit that obtains a program table of an analog broadcasting; a channel correspondence storing unit that stores a channel correspondence, the channel correspondence relating a channel of the digital broadcasting to a channel of the analog broadcasting; and a program converting unit configured to convert the program table to a compatible program table with the digital broadcasting according to the channel correspondence.

The invention may provide a broadcasting receive method including: receiving a digital broadcasting; obtaining a program table of an analog broadcasting; and converting the program table to a compatible program table with the digital broadcasting in accordance with a channel correspondence, the channel correspondence relating a channel of the digital broadcasting to a channel of the analog broadcasting.

### BRIEF DESCRIPTION OF THE DRAWINGS

Embodiment may be described in detail with reference to the accompanying drawings, in which:
Fig. 1 is a schematic block diagram of a first embodiment;
Fig. 2 shows an example of corresponding channels stored in a channel correspondence storing part of the first embodiment;
Fig. 3 shows an example of an analog TV program guide of the first embodiment;
Fig. 4 shows an example of actual data of the analog TV program guide of the first embodiment;
Fig. 5 shows an example of actual data of the analog TV program guide of the first embodiment;
Fig. 6 shows an example of actual data of the analog TV program guide of the first embodiment;

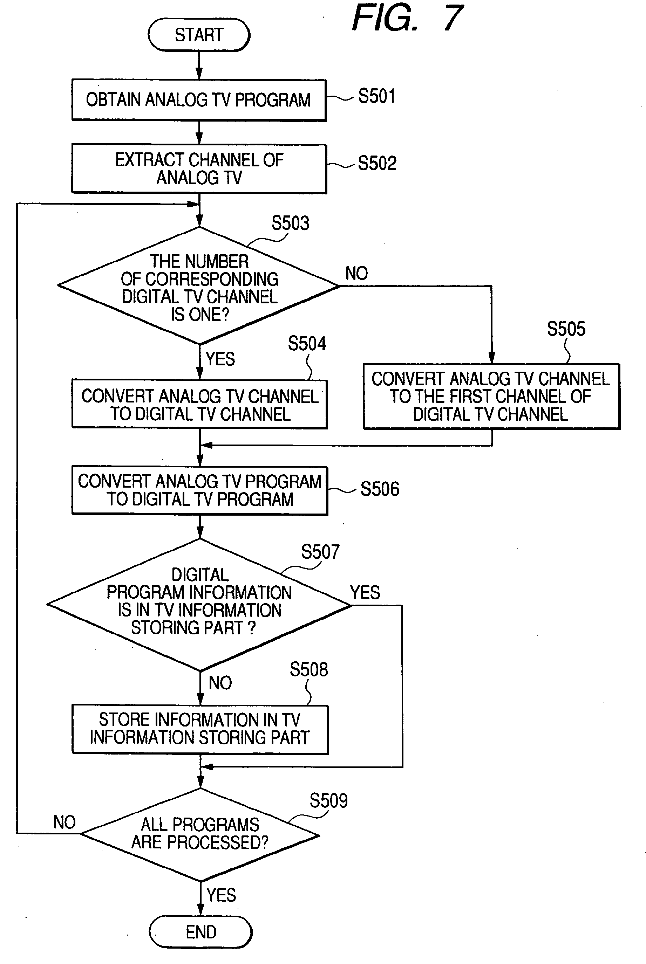

Fig. 7 is a diagram showing a flow of channel converting processes of the first embodiment;
Fig.8 shows an example of analog TV program information of the first embodiment;
Fig. 9 shows an example of the analog TVprogram information including estimated digital program information of the first embodiment;
Fig. 10 shows a display example of a program guide of the first embodiment;
Fig. 11 shows an example of actual data of a digital program of the first embodiment;
Fig. 12 shows an example of actual data of a digital program of the first embodiment;
Fig. 13 shows an example of program information including digital program information of the first embodiment;
Fig. 14 is a schematicblock diagram of a second embodiment;
Fig. 15 is a schematic block diagramof a third embodiment;
Fig. 16 is a display example of a program guide of the third embodiment;
Fig. 17 is a schematic block diagramof a fourth embodiment;
Fig. 18 is a display example of a program guide of the fourth embodiment;
Fig. 19 is a schematic block diagram of a fifth embodiment;
Fig. 20 is a schematic block diagram of a sixth embodiment;
Fig. 21 is a schematic block diagram of a seventh embodiment.

### DETAILED DESCRIPTION OF THE INVENTION

Below, embodiments of the present invention will be described by referring to the drawings.

### [First Embodiment]

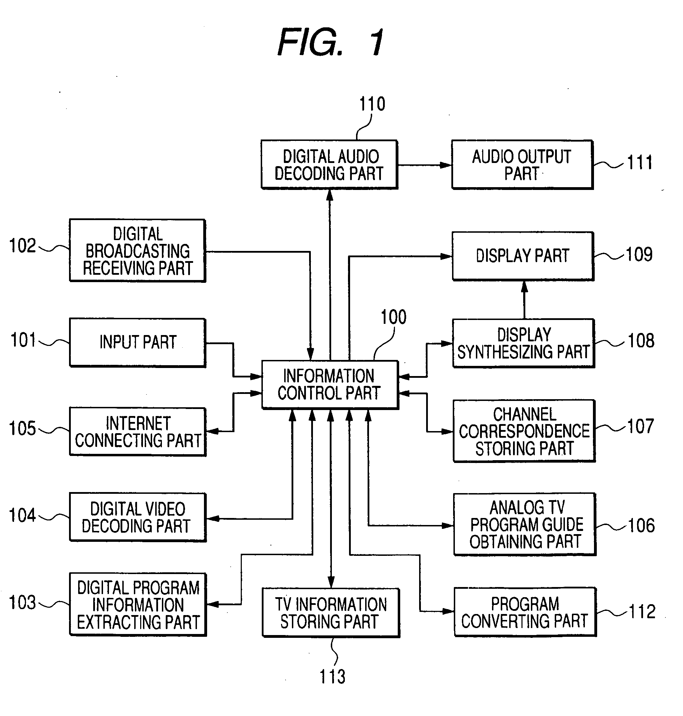

Fig. 1 is a schematic block diagram of an embodiment. A broadcasting receiver includes an input part 101 having, for instance, a remote controller or a mouse, a digital broadcasting receiving part 102 for receiving a digital TV broadcasting, a digital program information extracting part 103 for extracting program information referred to as what is called an EPG (Electronic Program Guide) from the received digital broadcasting, a digital video decoding part 104 for decoding a video part of the received digital broadcasting, a digital audio decoding part 110 for decoding an audio part of the received digital broadcasting, a display synthesizing part 108 for synthesizing the digital program information extracted in the digital program information extracting part 103 with analog program information and displaying the synthesized program information, a display part 109 for displaying a video decoded by the digital video decoding part 104 or a video synthesized by the display synthesizing part 108, an audio output part 111 for outputting an audio decoded by the digital audio decoding part 110, an internet connecting part 105 for accessing an internet, an analog TV program guide obtaining part 106 for obtaining a program guide of an analog TV broadcasting by the internet connecting part 105, a channel correspondence storing part 107 for storing the correspondence of a channel of the digital terrestrial TV broadcasting and a channel of the analog, both of which are for identical TV programs, a program converting part 112 for converting the analog TV program guide to a compatible program guide of the digital terrestrial TV broadcasting on the basis of the program guide obtained by the analog TV program guide obtaining part 106 and a corresponding channel of the channel correspondence storing part 107, a TV program information storing part 113 for storing TV program information such as the program guide obtained by the analog TV program guide obtaining part 106, the digital program information obtained by the digital program information extracting part 103 or the compatible program guide converted by the program converting part 112 and an information control part 100 for controlling information between the input part 101, the digital broadcasting receiving part 102, the digital video decoding part 104, the digital program information extracting part 103, the TV information storing part 113, the program converting part 112, the analog TV program guide obtaining part 106, the channel correspondence storing part 107, the display synthesizing part 108, the internet connecting part 105, the digital audio decoding part 110, the audio output part 111 and the display part 109.

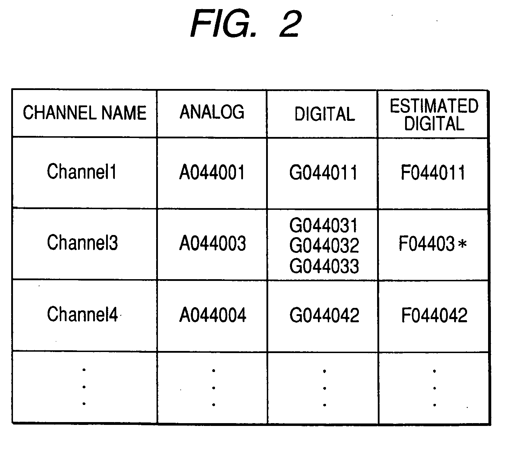

An example of the corresponding channel stored in the channel correspondence storing part 107 is shown in Fig. 2. As shown in Fig. 2, channel 1 indicates A044001 in the analog TV broadcasting, and indicates G04401 in the digital TV broadcasting. Channel 3 indicates A044003 in the analog TV broadcasting and shows three channels of G044031, G044032 and G044033 corresponding thereto in the digital TV broadcasting.

A represents analog, G represents digital and 044 represents a region (for instance, 23 wards of Tokyo). A numeric value of three figures after them represents a channel number. Since the Channel 1 of analog represents the channel number of 1 in the 23 wards in Tokyo, the Channel 1 is designated by 001. Similarly, the Channel 1 of digital is designated by 001. In Channel 3, three channels of a usual standard image quality (SDTV: Standard Definition Television) correspond to one channel of a high vision broadcasting (HDTV: High Definition Television), the three channels of 031, 032 and 033 are allocated to the Channel 3 of digital.

In the case of a digital TV program estimated in this embodiment, F is employed in place of G. Further, even when the three digital channels are present relative to the one analog channel as in the Channel 3, an estimation canbe simply performed only for one channel of analog. Thus, for the Channel 3, as an estimated channel, * is allocated in place of the ends 1, 2 and 3 like F04402*. At present, it is assumed that the first channel F044031 of a plurality of corresponding channels is allocated. A code system used in a channel correspondence shown in Fig. 2 represents only an example and the channels may be coordinated by other code system than the above-described code system.

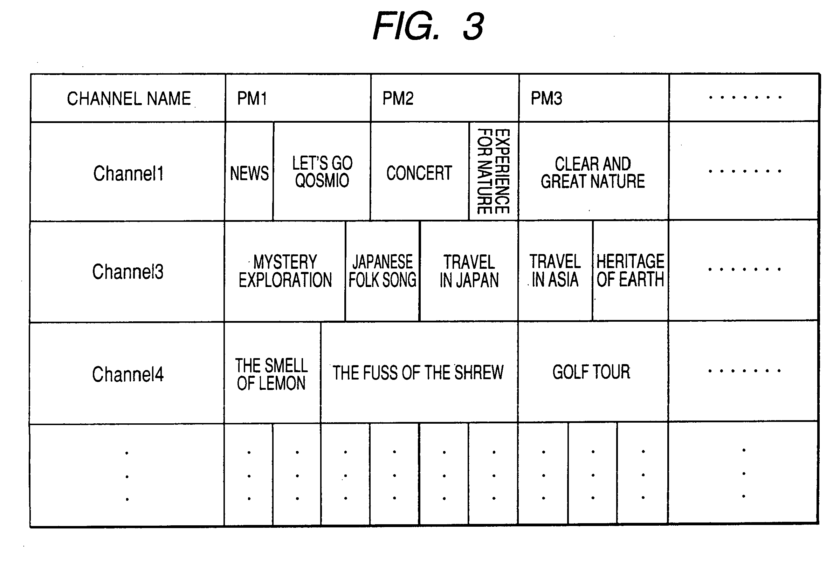

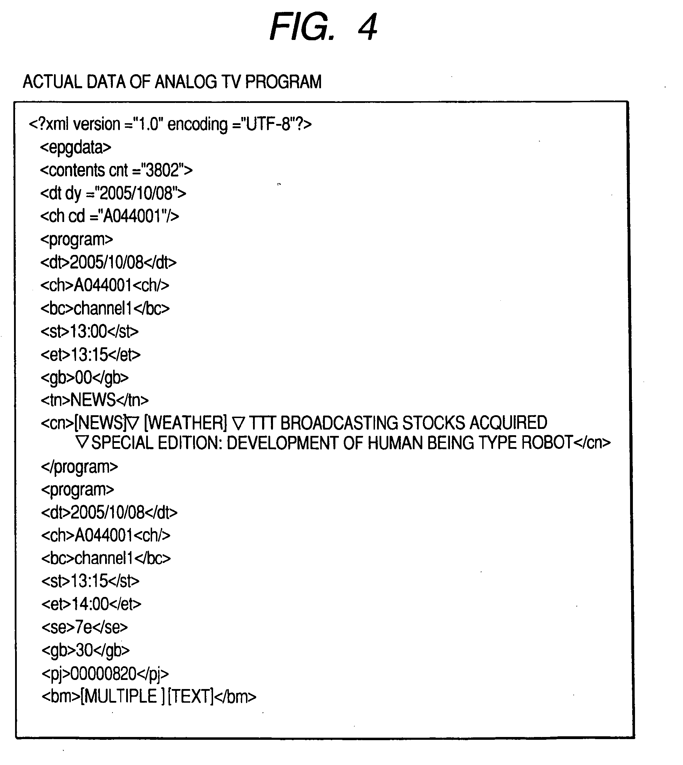

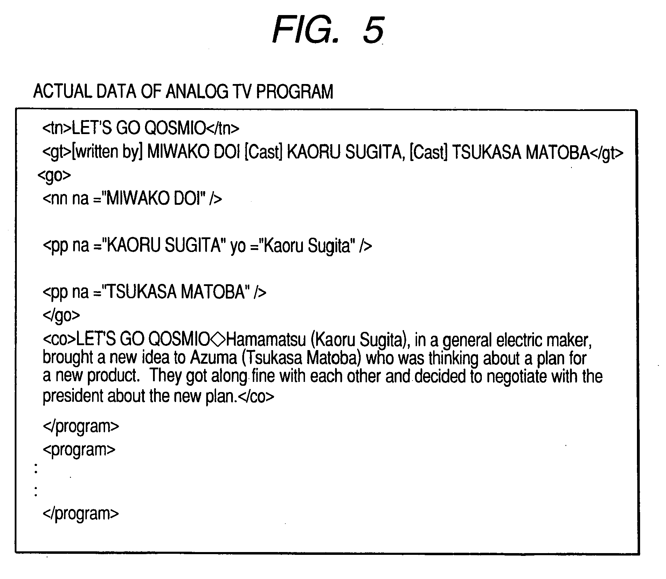

Fig. 3 shows an example of an analog TV program guide obtained by the analog TV program guide obtaining part 106. Figs. 4, 5 and 6 show examples of actual data of analog TV programs obtained by a device such as a TV, a DVD recorder having a hard disk, an AVPC or the like from an analog TV program providing service. Fig. 3 shows the example in which the actual data of the analog TV program is displayed on a screen to easily see the data. Here, the example is shown that analog TV program information is got from an internet service provider (ISP) through the internet connecting part 105. However, the present invention is not limited thereto and program information superimposed on the analog broadcasting received by an analog TV receiving part may be obtained in the analog TV program guide obtaining part 106.

<?xml version = "1.0" encoding = "UTF-8"?> in Fig. 4 shows that the data is written in an XML form hereinafter.

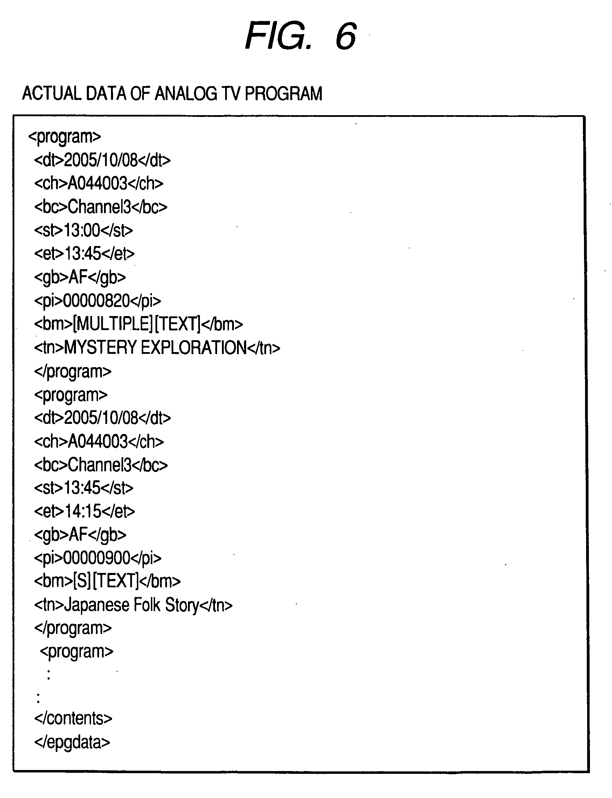

<EPG data> shows that the data is EPG data hereinafter. </EPG data> at the end of Fig. 6 shows that the EPG data is completed.

<contents cnt = "3802" shows the ID of obtained contents.

<dt dy = "2005/10/08"/> shows that the data is one prepared on October 8, 2005.

<ch cd = "A044001"/> shows that a channel code is A044001, that is, indicates the Channel 1 of the analog broadcasting.

<program> shows that the data of a TV program continues in the following and an end thereof is designated by </program>.

<dt>2005/10/08</dt> shows a date.

<ch>A044001</ch> shows a channel code.

<bc>Channel 1 </bc> shows the name of a channel.

<st> 13:00</st> shows a start time of a program.

<et> 13:15</et> shows an end time of a program.

<gb>00</gb> shows a genre.

<tn> NEWS</tn> shows the title of a program.

<cn>[NEWS] ▼ [WEATHER] ▼ TTT broadcasting stocks aquired. ▼ SPECIAL EDITION/DEVELOPMENT OF HUMAN BEING TYPE ROBOT</cn> shows the contents of a program. Programs sandwiched in between <program> and </program> continue in the following.

Since other codes included in Fig. 4 are not related to the explanation of this embodiment, a description of them will be omitted.

Now, in accordance with a channel correspondence flow, an explanation will be directed to how the digital program information extracting part 103 and the program converting part 112 convert the analog TV program as shown in Fig. 4 to the digital TV program.

Firstly, the actual data of the analog TV program as shown in Fig. 4 is obtained through the internet connecting part 105 (step S501). The number of times of obtaining the actual data of the analog TV program is, for instance, about once for a day and the analog program data ordinarily provided two weeks ahead is obtained. However, the number of obtaining the actual data of the analog TV program simply shows only an example. For instance, the number of times of obtaining the data may be suitably set, for instance, the data is obtained every hour, or the data is obtained when a program is received by a reserved image recording or when the program is not received.

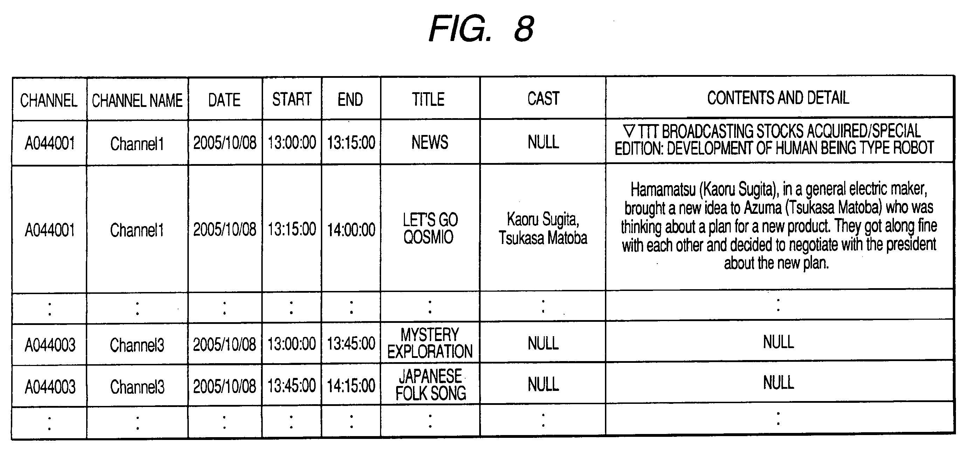

Then, the actual data of the analog TV program as shown in Fig. 4 obtained in the analog TV program guide obtaining part 106 is analyzed to extract the channel code shown by a tag of <ch></ch> (step S502). Actually, the actual data of the analog TV program as shown in Fig. 4 is stored in the TV information storingpart 113 as the analog TVprogram information shown from a first line to a sixth line of Fig 8.

In Fig. 8, the detail of the analog TV program information stored in the TV information storing part 113 is shown. In Fig.8, the analog TV program information is divided into the channel, the name of the channel, the date, the start, the end, the title, a performer, contents and the detail and stored in the TV information storing part 113. Apart having no information of the performer, the contents and the detail depending on a program is designated by NULL to clearly show that there is no information.

It is confirmed whether or not there are plural digital TV channels that correspond to the channel obtained in the analog TV program guide obtaining part 106 in accordance with a corresponding table as shown in Fig. 2 stored in the channel correspondence storing part 107 (step S503). For instance, it is confirmed whether there are plural digital TV channels corresponding to A044001.

Here, when one digital channel corresponds to the analog channel, the analog channel is converted to the estimated digital channel in accordance with the corresponding table stored in the channel correspondence storing part 107 (step S504).

On the other hand, when a plurality of digital channels correspond to the analog channel, for instance, F04403* is allocated to A044003 from the corresponding table stored in the channel correspondence storing part 107. In step S505, a first G044031 is allocated to the analog channel. This allocating system is temporary. When the allocating system of a simultaneous broadcasting is changed due to the change of a program structure, the allocating system can apparently meet the change.

In the steps S504 and S505, since the correspondence of the analog TV channel and the digital TV channel is obtained, the analog TV program information stored in the form as shown in Fig. 8 is read from the TV information storing part 113 to convert an analog channel code to an estimated digital channel code (step S506).

When the program information in which the analog channel code is converted to the estimated digital channel code is not stored in the TV information storing part 113 (step S507), the program information in which the analog channel code is converted to the estimated digital channel code is newly stored in the TV information storing part 113. On the other hand, when the program information in which the analog channel code is already converted to the estimated digital channel code is stored in the TV information storing part 113 (step S507), the program information is not updated.

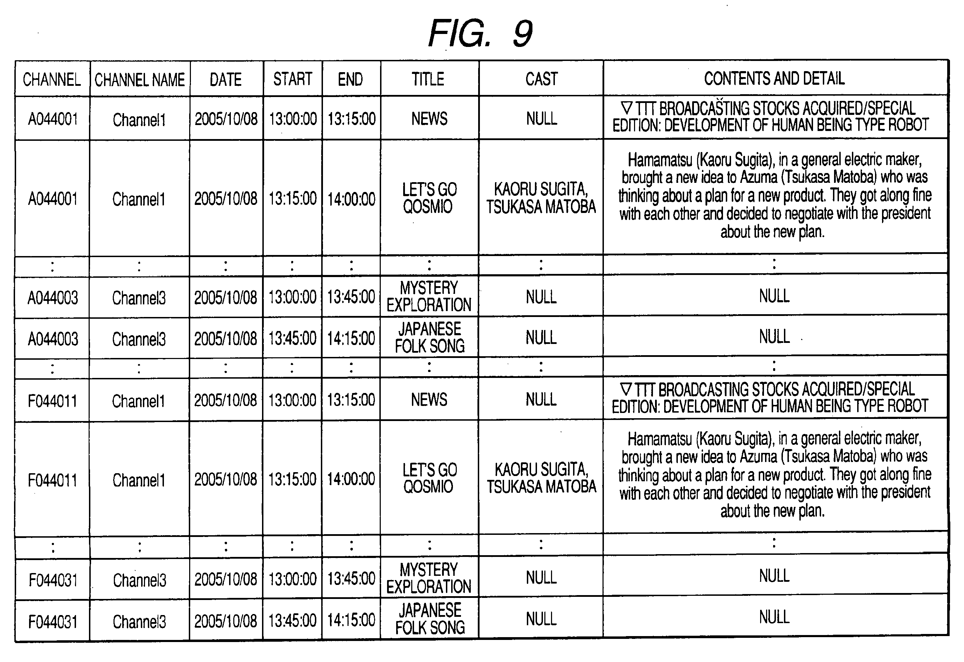

It is confirmed whether or not all the programs of the program information stored in the TV information storing part 113 are processed is recognized (step S509). When all the programs are not processed, the procedure returns to the step S503 to recognize the process in accordance with the corresponding table stored in the channel correspondence storing part 107. This is a loop for converting all the analog TV program information to digital program information. After the conversion is completed, the converted program information is written in the TV information storing part 113 in the step S508. As a result, the contents of the TV information storing part 113 only composed of the analog TV program information as shown in Fig. 8 are changed to contents including the estimated digital program information as shown in Fig. 9. Between analog programs located in the upper part of Fig. 9 and estimated digital programs located in the lower part, channel codes are different and stored programs are not different.

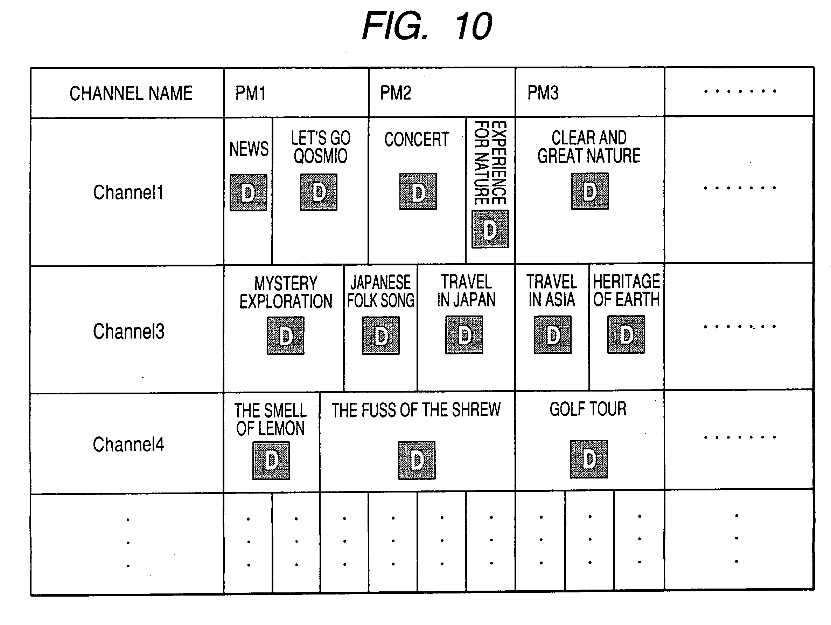

A program guide obtained by synthesizing the program information in the display synthesizing part 108 on the basis of the program information shown in Fig. 9 is displayed in the display part 109 as shown in Fig. 10. As shown in Fig. 10, the program guide is substantially the same as the above-described analog program guide shown in Fig. 3 and a character of "D" of void in a black character showing that the estimated digital TV program is present is added thereto. A viewer selects a digital program from the estimated digital program guide so that the viewer can simply reserve an image recording of the digital program or view the digital program. At the time of viewing the digital program or reserving to record the image of the digital program, the information control part 100 converts the first F of the channel code to G and instructs the digital TV receiving part to receive the digital TV program.

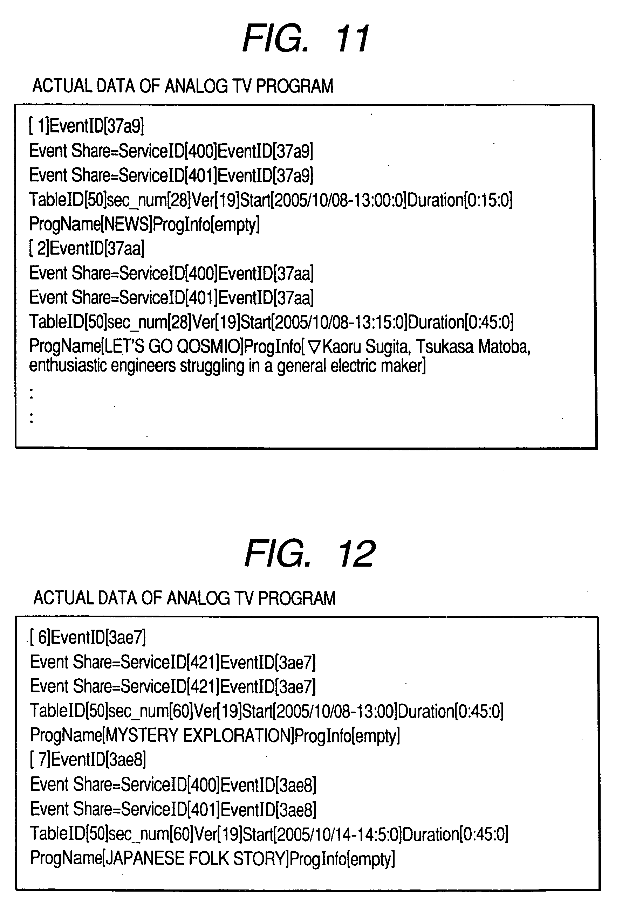

When the digital broadcasting is viewed, the video part is decoded in the digital video decodingpart 104 from the digital broadcasting received in the digital broadcasting receiving part and displayed in the display part 109 and the audio part is decoded in the digital audio decoding part 110 from the received digital broadcasting and the audio is outputted in the audio output part 111. At the same time, in the digital TV broadcasting, the program information is transmitted together with video and audio information. For instance, Fig. 11 shows the information of the actual data of the digital program of the Channel 1 and Fig. 12 shows the information of the actual data of the digital program of the Channel 3. The digital broadcasting receiving part can simply receive only the program information of the same channel that the digital broadcasting receiving part receives. For instance, in Fig. 10, if a "mystery exploration" of the Channel 3 of the digital TV broadcasting that is currentlybroadcast is selected and viewed, the receiving part can simply receive only the part of the Channel 3 shown in Fig. 12.

The program information extracted in the digital program extracting part 105 from the digital broadcasting received by the digital broadcasting receiving part 102 is stored in the TV information storing part 113. For instance, in the actual data of the digital program shown in Fig. 12, [6] Event ID[3ae7] represents a recognizing ID of the digital TV broadcasting treated by the receiver.

Event Share = Service ID [431] Event ID[3ae7]and Event Share = Service ID [431] Event ID[3ae7] show a correspondence of a program designated by a first recognizing ID and a channel. Here, this program shows 031, that is, the first digital channel of the Channel 3. Since the channel code shown in Fig. 2 is for digital channels, G and an area code are added thereto to convert the channel code to G044031.

In the analog program guide, the date, the start time and the end time of the program are shown. In the digital program guide, a date, a start time and a duration time are shown like Table ID[50]sec-num[60]Ver[19]Start[2005/10/08-13:00]Duration[0: 45:0]. The duration time is displayed to a unit of second. Here, the program data is converted to the start time and the end time following the analog program guide. ProgName"MYSTERY EXPLORATION"ProgInfo[empty] represents that the name of a program is the "MYSTERY EXPLORATION" and the detailed information of the program is empty, that is, none.

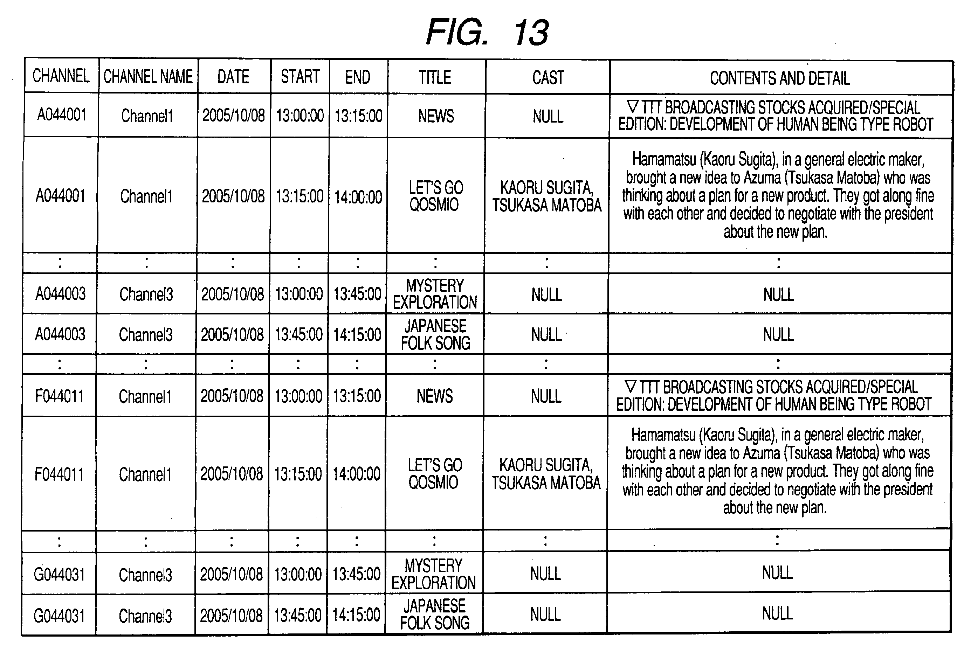

These information are converted and added to the program information of the TV information storing part 113 as shown in Fig. 9 and stored. At this time, in F044031 corresponding to the same channel, program information having the same date and the same start time is deleted and the received digital program information is written instead thereof. As a result, program information shown in Fig. 13 is obtained.

As understood from Fig. 13, the part of the digital program of the Channel 3 becomes the digital program channel (G044031) in place of the estimated digital program channel (F044031). On the other hand, since the program information cannot be received by the Channel 1 that is not a receiving channel from the digital broadcasting, a part of the Channel 1 remains to be an estimated digital channel of F044011.

Further, a delay adding part for adding a delay part necessary for compressing the digital broadcasting to the end time of the analog TV program guide may be provided in the program converting part 112. In such a way, the digital broadcasting can be viewed without a delay.

According to the above-described configuration, for the channels receiving no digital TV broadcasting, programs can be simply selected on the basis of the program guide estimated from the analog program guide.

### [Second Embodiment]

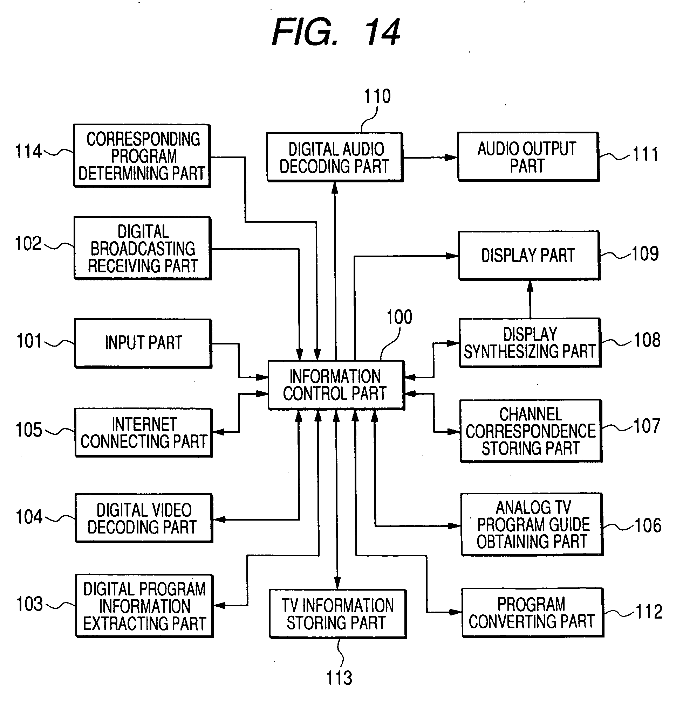

Another embodiment of the above-described first embodiment will be described below. In the schematic configuration shown in Fig. 1, the program is converted in accordance with the channel correspondence relating the channels of the analog TV broadcasting to the digital TVbroadcasting stored in the channel correspondence storing part 107. In most of present digital broadcastings, since substantially the same programs are correspondingly broadcast in the analog TV and the digital TV, a problem does not arise substantially in all the programs. However, only in a part of the programs, different broadcastings are carried out in the analog TV and the digital TV. A schematic configuration that meets such a program formation is shown in Fig. 14.

In Fig. 14, in addition to the schematic structure shown in Fig. 1, a corresponding program determining part 114 is provided in which the correspondence of an analog TV program and a digital TV program is obtained by comparing program information obtained by an analog TV program guide obtaining part 106 with the digital program information of a channel obtained by a digital program information extracting part 103 on the basis of the digital program information extracted by the digital program information extracting part 103 and the corresponding channel stored in a channel correspondence storing part 107 to determine whether or not the program information is updated and stored in a TV information storing part 113.

Here, when the program start time, the end time and the name of the program of the digital program information obtained by the digital program information extracting part 103 are the same as the program start time, the end time and the name of the program of the program information of the channel obtained by the analog TV program guide obtaining part 106, the corresponding program determining part 114 determines that the program information is updated and stored in the TV information storing part 113. When they do not correspond to each other, the corresponding program determining part does not store the program information.

According to the above-described configuration, even in the program formation in which the analog TV and the digital TV perform different broadcastings, the program of the digital TV broadcasting can be simply selected.

### [Third Embodiment]

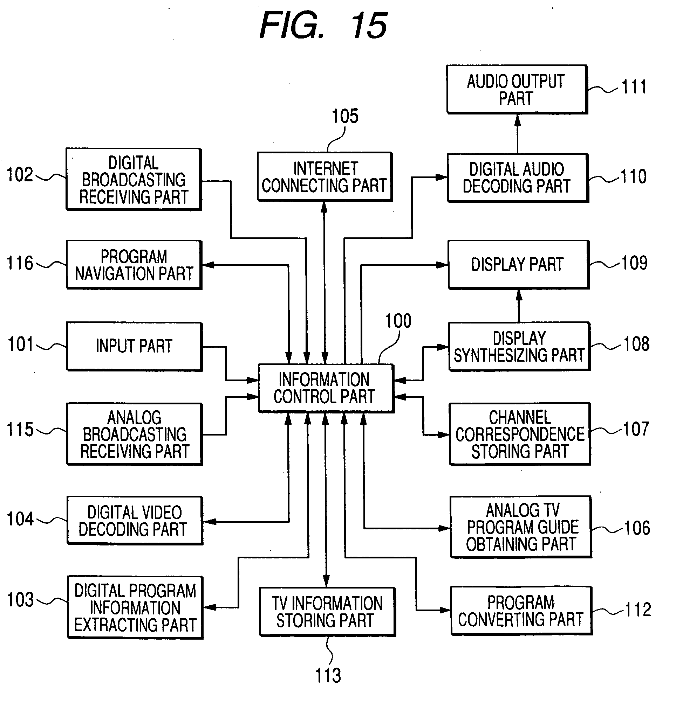

In the schematic configuration of the first embodiment shown in Fig. 1, only the programs of the digital broadcasting can be received. However, the configuration of this embodiment further includes a program navigation part 116 and an analog TV broadcasting receiving part 115 as shown in Fig. 15 so that both a digital broadcasting and an analog broadcasting can be received.

In such a structure, the program navigation part 116 forms a program navigation screen based on an analog TV broadcasting program guide obtained from an analog TV program guide obtaining part 106 and displays this navigation screen on a display part 109. When the navigation screen is displayed at the time of designating to view a program by the program navigation part 116, an input part 101 designates to view a digital terrestrial TV broadcasting. When the input part 101 designates to view the digital terrestrial TVbroadcasting, an information control part 100 designates a channel of the digital TV broadcasting in accordance with program information stored in a TV information storing part 113 to switch a digital broadcasting receiving part 102 to the channel designated by the input part 101.

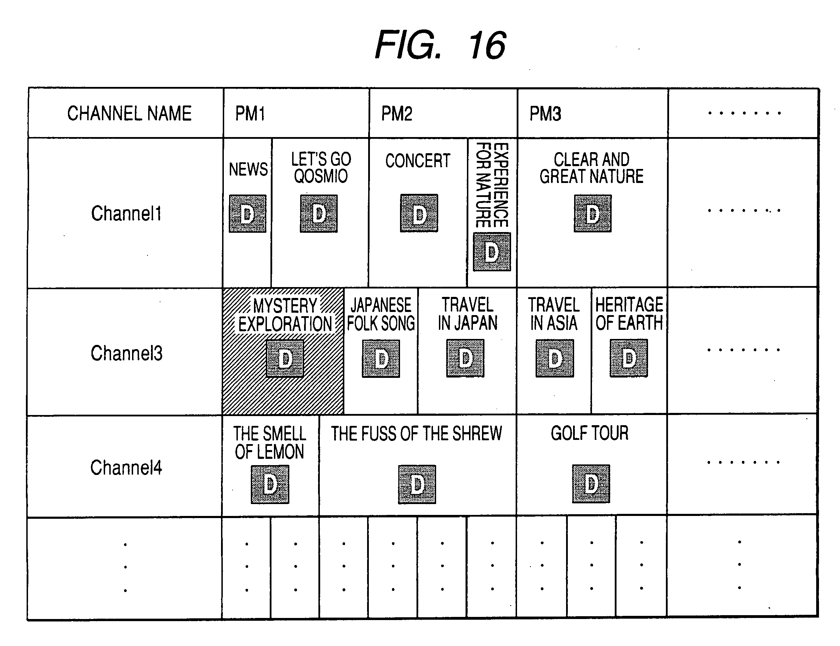

The program navigation part 116 displays, for instance, the analog TV program guide as shown in Fig. 16 and selectively instructs the input part 101 to receive either an analog TV program or a digital TV program. Thus, a digital program estimated from the analog TV program guide can be selected.

Therefore, according to this embodiment, a user operates a remote controller or a mouse on the navigation screen shown in Fig. 16 to move a cursor to a program that the user desires to see. In an example shown in Fig. 16, the part of a "MYSTERY EXPLORATION" of a Channel 3 is displayed in a shaded state to indicate that the cursor is present at that part.

Under this state, by pressing an "analog TV" button or a "digital TV" button of the remote controller in the input part 101, the contents of the TV information storing part 113 as shown in Fig. 9 are referred to estimate a corresponding channel. The receiving part is instructed to switch the channel, so that the channel can be received.

Here, the switching operation for viewing the digital broadcasting is described. However, the present invention is not limited to the viewing of the digital broadcasting. This embodiment may be applied to the viewing of a designated program of the digital broadcasting which is timer-recorded and to a timer-recording.

According to the above-described structure, an operation can be carried out from the input part 101 in the same manner as that for selecting a program usually viewed in the analog broadcasting to easily view a high definition digital TV broadcasting.

### [Fourth Embodiment]

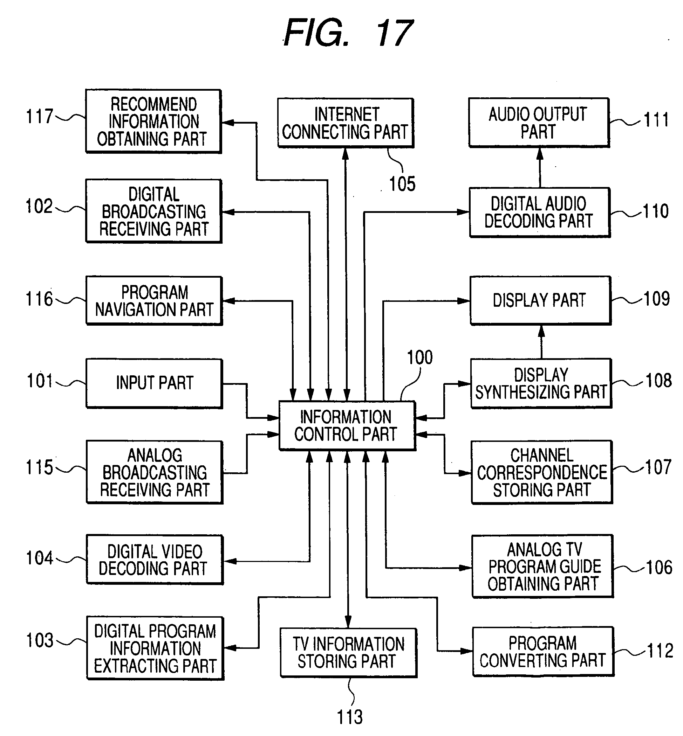

As shown in Fig. 17, the structure of this embodiment further includes a recommend information obtaining part 117 in the configuration shown in Fig. 15.

In such a structure, the recommend information obtaining part 117 obtains program recommending information related to a program of an analog TV broadcasting from an internet connecting part 105. A program navigation part 116 forms a program navigation screen to which the recommending information is added in accordance with the recommending information obtained by the recommend information obtaining part and displays the program navigation screen on a display part 109. When a digital TV broadcasting is designated in an input part 101 from the navigation screen, a digital broadcasting receiving part 102 is switched to a channel of the digital TV broadcasting on the basis of program information stored in a TV information storing part 113.

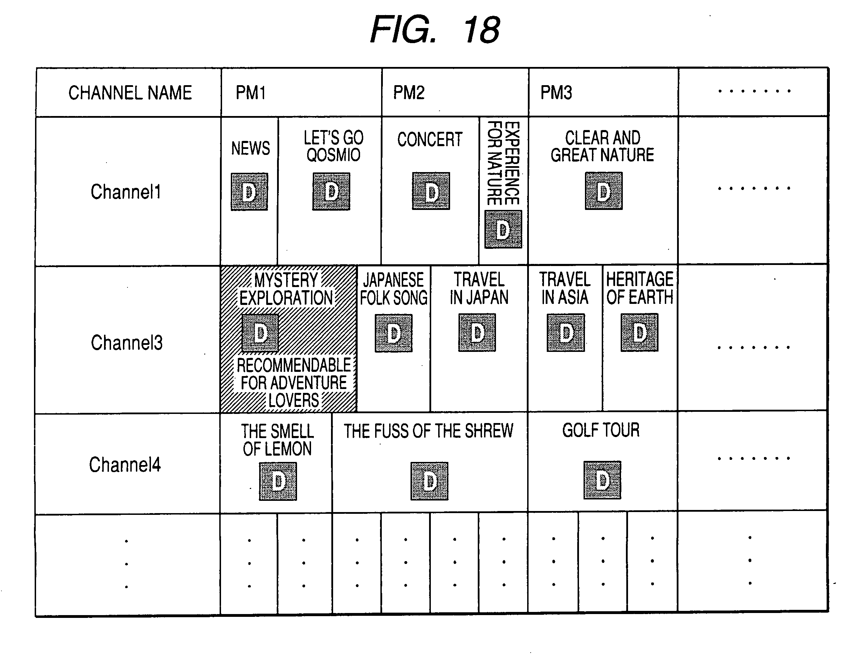

The program navigation part 116 displays an analog TV program guide to which, for instance, the recommending information is added as shown in Fig. 18, and instructs the input part 101 to select a program according to the user's selection seeing the recommending information. Thus, an estimated digital program can be selected from the analog TV program guide to which the recommending information is added.

Therefore, according to this embodiment, on the navigation screen shown in Fig. 18, the recommending information having a void is added and displayed.

Under this state, by pressing an "analog TV" button or a "digital TV" button of the remote controller in the input part 101, the contents of the TV information storing part 113 as shown in Fig. 9 are referred to estimate a corresponding channel. The receiving part is instructed to switch the channel, so that the channel can be received.

Here, the switching operation for viewing the digital broadcasting is described. However, the present invention is not limited to the viewing of the digital broadcasting. This embodiment may be applied to the viewing of a designated program of the digital broadcasting which is timer-recorded, and to a timer-recording.

According to the above-described configuration, an operation can be carried out from the input part 101 in the same manner as that for selecting a program usually viewed in the analog broadcasting to easily view a desired high definition digital TV broadcasting.

### [Fifth Embodiment]

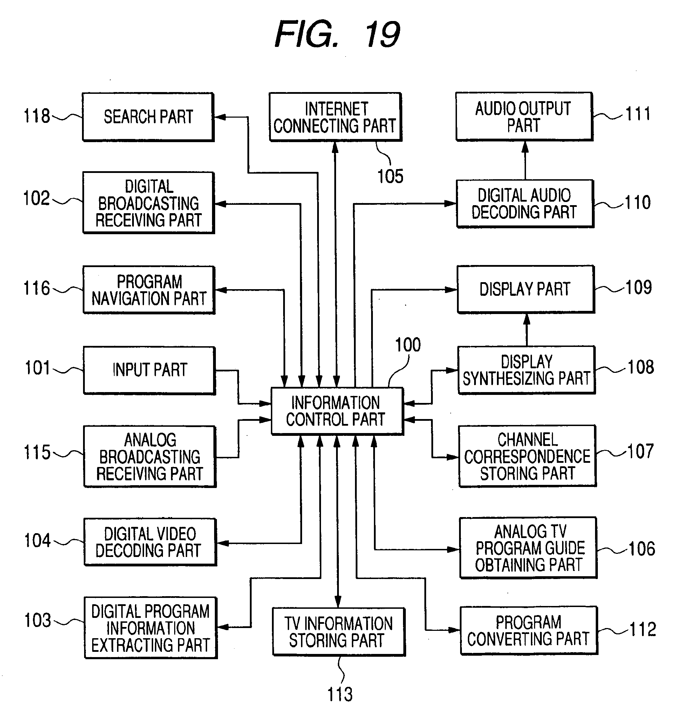

As shown in Fig. 19, the configuration of this embodiment additionally includes a search part 117 to the configuration shown in Fig. 15.

In the above-described configuration, program information stored in a TV information storing part 113 is searched on the basis of search information such as the name of a program or the name of a performer inputted in an input pat 101. A screen for displaying the searched program information on a display screen is formed in a program navigation part 116 and displayed on a display part 109. When a digital TV broadcasting is designated by the input part 101 on the program navigation screen of the searched result displayed on the display part 109, a digital broadcasting receiving part 102 is switched to a channel of the digital TV broadcasting on the basis of the program information stored in the TV information storing part 113.

The program navigation part 116 displays, for instance, the program information of the searched result and instructs the input part 101 to select a program from the searched result. Thus, an estimated digital program of the designated program can be selected. The present invention is not limited to the viewing of the digital broadcasting. This embodiment may be applied to the viewing of a designated program of the digital broadcasting which is or to a reservation to record an image.

According to the above-described configuration, the designated program from the searched result can be easily viewed in a desired digital TV broadcasting.

### [Sixth Embodiment]

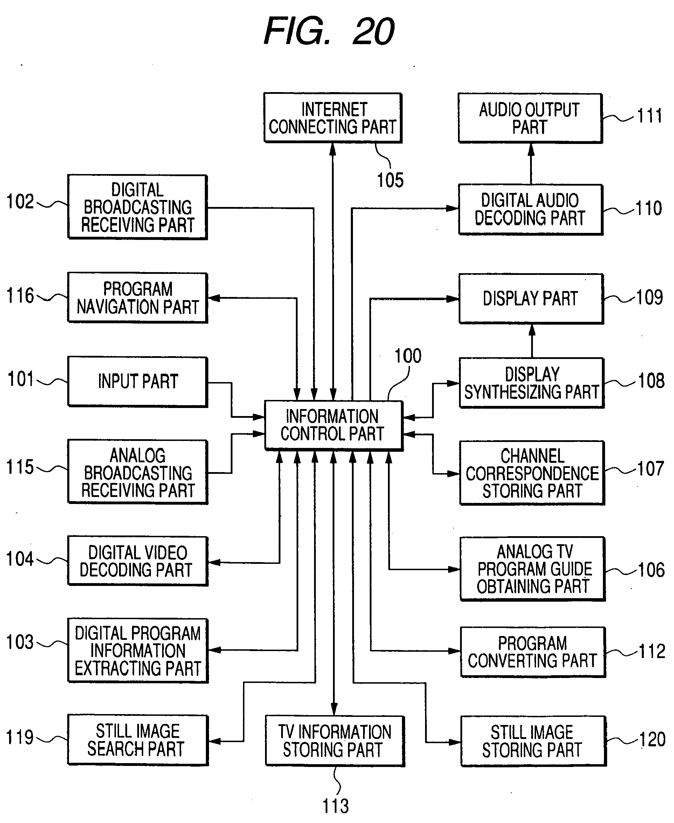

As shown in Fig. 20, the structure of this embodiment additionally includes a still image search part 119 and a still image storing part 120 in the structure shown in Fig. 15.

In the above-described structure, a video signal of a digital broadcasting signal received in a digital broadcasting receiving part 102 is decoded to a signal that can be displayed on a display part 109 by a digital video decoding part 104. An audio signal is decoded to a signal that can be outputted to an audio output part 111 by a digital audio decoding part 110. When a program navigation screen is formed in a program navigation part 116, a still image related to a relevant program is searched by the still image search part 119 in accordance with program information stored in a TV information storing part 113 through an internet connecting part 105. As a result, the searched still image information is stored in the still image storing part 120.

Further, a relevant still image from the still image storing part 120 is synthesized with a column of the relevant program of program guide information to display the still image in a program guide on the display part 109 by the program navigation part 116. The still image synthesized in the program guide is selected by an input part 101 to switch the digital broadcasting receiving part 102 to a channel of the digital TV broadcasting.

Thus, a thumbnail (still image) showing a scene of the relevant program is designated so that the digital TV broadcasting can be viewed as in the case of an analog TV broadcasting.

### [Seventh Embodiment]

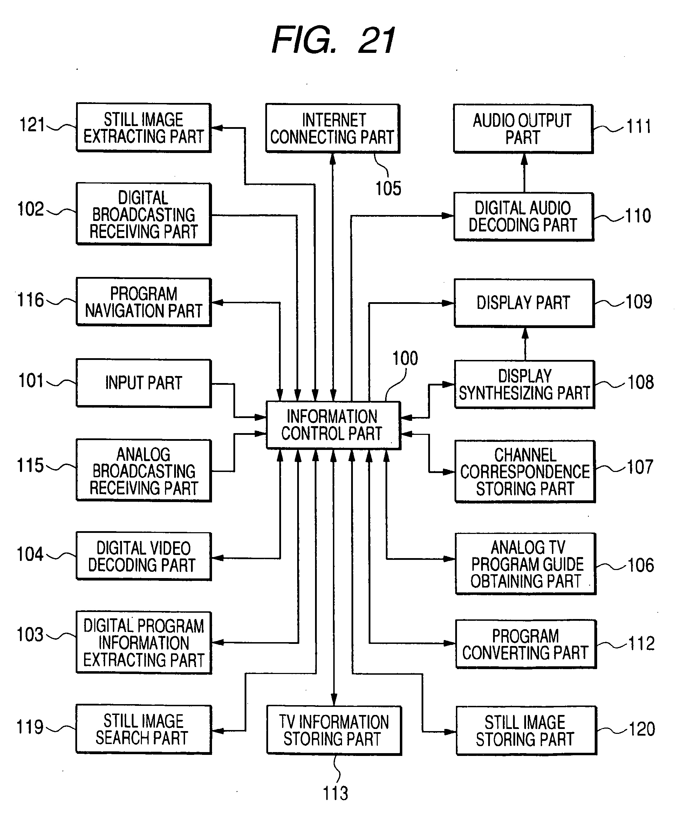

As shown in Fig. 21, the configuration of this embodiment additionally includes a still image extracting part 121 to the configuration shown in Fig. 20.

In the above-described structure, a video signal of a digital broadcasting signal received in a digital broadcasting receiving part 102 is decoded to a signal that can be displayed on a display part 109 by a digital video decoding part 104. An audio signal is decoded to a signal that can be outputted to an audio output part 111 by a digital audio decoding part 110. When a program navigation screen is formed in a program navigation part 116, a still image is extracted from an analog broadcasting video received by an analog broadcasting receiving part 115 by the still image extracting part 121 on the basis of program information stored in a TV information storing part 113. The extracted still image information is stored in a still image storing part 122.

Further, a relevant still image from the still image storing part 122 is synthesized with a column of the relevant program of program guide information to display the still image in a program guide on the display part 109 by the program navigation part 116. The still image synthesized in the program guide is selected by an input part 101 to switch the digital broadcasting receiving part 102 to a channel of the digital TV broadcasting.

Thus, a thumbnail (still image) showing a scene of the relevant program is designated so that the digital TV broadcasting can be viewed as in the case of an analog TV broadcasting.

## Claims

1. A broadcasting receive apparatus, comprising:
a digital broadcasting receiving unit that receives a digital broadcasting;
a program table obtaining unit that obtains a program table of an analog broadcasting;
a channel correspondence storing unit that stores a channel correspondence, the channel correspondence relating a channel of the digital broadcasting to a channel of the analog broadcasting; and
a program converting unit configured to convert the program table to a compatible program table with the digital broadcasting according to the channel correspondence.

2. The apparatus according to claim 1, further comprising:
a program information storing unit that stores the compatible program table.

3. The apparatus according to claim 1, further comprising:
a display unit that displays a broadcast channel of the digital broadcasting selected from the compatible program table.

4. The apparatus according to claim 2, further comprising:
an information extracting unit configured to extract digital program information of a digital broadcast channel from the digital broadcasting; and
a corresponding program determining unit configured to compare the program table of an analog broadcast obtained by the program table obtaining unit with the digital program information according to the channel correspondence and the compatible program table to determine whether the program information is updated and stored in the program information storing unit.

5. The apparatus according to claim 2, further comprising:
an information extracting unit configured to extract digital program information of a digital broadcast channel from the digital broadcasting; and
a corresponding program determining unit configured to compare program information in the compatible program table with the digital program information to determine whether the program information is updated to the digital program information.

6. The apparatus according to claim 1, wherein the program converting unit adds a delay time for compressing the digital broadcasting to an end time of a broadcast program in the program table.

7. The apparatus according to claim 2, further comprising:
a program navigation unit configured to form a program navigation screen according to the program table;
wherein, when a program to be viewed is designated in the program navigation screen, the digital broadcasting receiving unit is switched to a channel corresponding to the program according to the compatible program table.

8. The apparatus according to claim 7, further comprising:
an analog broadcasting receiving unit that receives an analog broadcasting;
wherein, when a program to be viewed is designated in the program navigation screen, one of the analog broadcasting receiving unit and the digital broadcasting receiving unit is switched to a channel corresponding to the program according to the compatible program table.

9. The apparatus according to claim 7, further comprising:
a recommend information obtaining unit that obtains program recommending information for analog broadcasting programs;
wherein the program navigation unit forms the program navigation screen containing the program recommending information.

10. The apparatus according to claim 8, further comprising:
a search unit configured to search program information stored in the program information storing unit according to search information for searching a program;
wherein the analog broadcasting receiving unit and the digital broadcasting receiving unit are switched according to the program searched by the search unit.

11. The apparatus according to claim 7, further comprising:
a still image search unit configured to search a still image relevant to a designated program according to program information stored in the program information storing unit; and
a still image storing unit that stores the still image;
wherein the program navigation unit forms the program navigation screen by synthesizing the still image with the program information with respect to the designated program.

12. The apparatus according to claim 8, further comprising:
a still image extracting unit configured to extract a still image from an analog broadcasting image received by the analog broadcasting receiving unit;
wherein the program navigation unit forms the program navigation screen by synthesizing the still image with program information with respect to a program relevant to the still image.

13. A broadcasting receive method comprising:
receiving a digital broadcasting;
obtaining a program table of an analog broadcasting; and
converting the program table to a compatible program table with the digital broadcasting in accordance with a channel correspondence, the channel correspondence relating a channel of the digital broadcasting to a channel of the analog broadcasting.
